# EUROPÄISCHE PATENTANMELDUNG

(11) **EP 2 052 899 A2**
(43) Veröffentlichungstag der Anmeldung: **29.04.2009**
(21) Anmeldenummer: 08166520.0
(22) Anmeldetag: 14.10.2008
(51) Int. Cl.: B60K 17/04

(54) **Antriebsvorrichtung, insbesondere für ein Kraftfahrzeug**

(30) Priorität: 27.10.2007 DE 102007051458; 12.09.2008 DE 102008042027
(71) Anmelder: ZF Friedrichshafen AG, 88038 Friedrichshafen (DE)
(72) Erfinder: Rudolf, Thomas, 14542 Werder/OT Kemnitz (DE); Wittholz, Jan, 97506, Grafenrheinfeld (DE)

(57) **Zusammenfassung**

Die Erfindung betrifft eine Antriebsvorrichtung (1), insbesondere für ein Kraftfahrzeug, die einen Motor (2), eine Kupplung (3) und ein Getriebe (4) umfasst, wobei der Motor (2) und das Getriebe (4) bei bestimmungsgemäßem Gebrauch lösbar verbunden sind. Um ein schnelles Lösen und Wiederverbinden von Motor und Getriebe zu ermöglichen, was insbesondere im Motorsport vorteilhaft ist, sieht die Erfindung vor, dass zwischen dem Motor (2) und dem Getriebe (4) ein Schnellverbindungsmittel (5) angeordnet ist, mit dem die Verbindung zwischen Motor (2) und Getriebe (4) hergestellt und gelöst werden kann.

## Beschreibung

Die Erfindung betrifft eine Antriebsvorrichtung, insbesondere für ein Kraftfahrzeug, die einen Motor, eine Kupplung und ein Getriebe umfasst, wobei der Motor und das Getriebe bei bestimmungsgemäßem Gebrauch lösbar verbunden sind.

Bei speziellen Anwendungen, insbesondere im Bereich des Rennsports, kann es wichtig sein, dass das Getriebe eines Antriebsstranges vom Motor schnell gelöst bzw. wieder mit ihm verbunden werden kann.

Im Stand der Technik sind Betätigungssysteme bekannt, die im Falle gedrückter Kupplungen am Getriebe befestigt sind. Betätigungssysteme für gezogene Kupplungen sind mit der Kupplung fest verbunden, weshalb sie nicht am Getriebe befestigt werden können. Bekannt sind Ausrücksysteme für gezogene Kupplungen, die "spinnenartig" die Kupplung umgreifen und die am Motor befestigt sind. Nachteilig ist bei einer derartigen Lösung, dass das "spinnenartige" Betätigungselement einen gewissen radialen Bauraum benötigt, da es die Kupplung radial von außen her umgreifen muss. Hierdurch wird die mögliche Baugröße der Kupplung eingeschränkt.

Der Erfindung liegt die **Aufgabe** zugrunde, eine Antriebsvorrichtung der eingangs genannten Art so fortzubilden, dass ein schnelles Lösen des Motors vom Getriebe und ein schnelles Wiederverbinden möglich wird. Dabei soll die Vorrichtung so ausgebildet sein, dass der von ihr benötigte radiale Bauraum möglichst gering ist, um radialen Bauraum für die Kupplung zu lassen. Die zu schaffende Vorrichtung soll insbesondere bei gezogenen Kupplungen vorteilhaft zum Einsatz kommen.

Die **Lösung** dieser Aufgabe durch die Erfindung ist dadurch gekennzeichnet, dass zwischen dem Motor und dem Getriebe ein Schnellverbindungsmittel angeordnet ist, mit dem die Verbindung zwischen Motor und Getriebe hergestellt und gelöst werden kann.

Das Schnellverbindungsmittel umfasst dabei bevorzugt ein Betätigungselement, durch dessen Betätigung das Schnellverbindungsmittel verriegelt oder entriegelt werden kann. Das Betätigungselement ist dabei vorzugsweise als Schwenkhebel ausgebildet.

Für die konkrete Realisierung des Schnellverbindungsmittels hat sich eine Lösung als vorteilhaft erwiesen, bei der vorgesehen ist, dass das Schnellverbindungsmittel ein Halteelement mit mindestens einer Ausnehmung aufweist, in der mindestens ein Sperrkörper zur Drehachse des Antriebsvorrichtung radial verschieblich, jedoch axial festgelegt angeordnet ist. Dabei ist weiter vorgesehen, dass das Schnellverbindungsmittel ein Verschiebeelement aufweist, das abhängig von seiner Position relativ zum Halteelement die radiale Position des mindestens einen Sperrkörpers festlegt bzw. in mindestens zwei Positionen begrenzt, wobei das Schnellverbindungsmittel weiterhin ein geklemmtes Element aufweist, das abhängig von der radialen Position des mindestens einen Sperrkörpers entweder zum Halteelement axial fixiert oder axial freigegeben ist, wobei das Halteelement mittelbar oder unmittelbar am Motor oder am Getriebe axial befestigt ist und wobei das geklemmte Element mittelbar oder unmittelbar am Getriebe oder am Motor axial befestigt ist.

Das Halteelement, das Verschiebeelement und das geklemmte Element sind dabei bevorzugt ringförmig ausgebildet und konzentrisch zueinander angeordnet. Das Verschiebeelement ist mit Vorteil radial außenliegend zum Halteelement angeordnet, wobei eine innere zylindrische Fläche des Verschiebeelements und eine äußere zylindrische Fläche des Halteelements aneinanderliegende Gleitflächen bilden.

Der mindestens eine Sperrkörper ist bevorzugt als Kugel ausgebildet. Eine vorteilhafte Ausführungsform der Erfindung sieht vor, dass eine Anzahl Sperrkörper äquidistant um den Umfang des Halteelements herum in Ausnehmungen angeordnet sind. Das Verschiebeelement hat bevorzugt eine der Anzahl der Sperrkörper entsprechende Anzahl von Ausnehmungen zum zumindest teilweisen Eintritt der Sperrkörper. Die Ausnehmungen im Verschiebeelement weisen bevorzugt eine (teil-)zylindrische oder (teil-)kugelige Oberfläche auf.

Das geklemmte Element kann als ringförmiges Teil ausgebildet sein und einen Aufnahmeabschnitt für den mindestens einen Klemmkörper aufweisen, der als ringnutartige Eindrehung ausgebildet ist.

Ein Verschlussring kann axial verschieblich und federvorgespannt direkt oder indirekt am Halteelement und/oder am Verschiebeelement angeordnet sein, um bei gelöstem geklemmten Element sich vor die Ausnehmungen im Haltelement zur Verhinderung des Herausfallens des mindestens einen Klemmkörpers aus dem Halteelement zu schieben.

Der Schwenkhebel kann mit einer Welle verbunden sein, die mit einem ihrer Enden in einer Kulissenlagerung drehbar gelagert ist, so dass bei der Verdrehung der Welle durch Verschwenken des Schwenkhebel die Welle axial verschoben wird. An der Welle kann weiterhin ein Mitnehmer angeordnet sein, der am Außenumfang des Verschiebeelement angreift und bei seiner axialen Verschiebung das Verschiebeelement um die Drehachse dreht.

Die Kupplung ist bevorzugt am Motor befestigt. Weiterhin kann ein (Kupplungs)Ausrücker bei bestimmungsgemäßem Gebrauch der Antriebsvorrichtung am Getriebe befestigt sein.

Die Antriebsvorrichtung ist vorzugsweise Bestandteil des Antriebsstrangs eines Motorsportfahrzeugs.

Durch die vorgeschlagene Konstruktion wird es möglich, eine schnell lösbare und schnell wieder herstellbare Verbindung zwischen Motor und Getriebe in einem Kraftfahrzeugantriebsstrang bereitzustellen, die sich durch nur geringen radialen Bauraum auszeichnet.

In der Zeichnung ist ein Ausführungsbeispiel der Erfindung dargestellt. Es zeigen:
Fig. 1 eine perspektivische Darstellung eines Teils eines Antriebsstrangs eines Rennsportfahrzeugs, wobei ein Schnellverbindungsmittel zwischen Motor und Getriebe gelöst ist,
Fig. 2 die Seitenansicht des Teils des Antriebsstrangs nach Fig. 1, wobei Motor und Getriebe miteinander verbunden sind,
Fig. 3 das Teil des Antriebsstranges in der Vorderansicht gemäß dem Schnitt A-A nach Fig. 2,
Fig. 4 die zu Fig. 3 entsprechende Draufsicht auf das Teil des Antriebsstrangs,
Fig. 5 die Einzelheit "X" gemäß Fig. 3,
Fig. 6 die Seitenansicht des Teils des Antriebsstrangs nach Fig. 1, wobei Motor und Getriebe voneinander gelöst dargestellt sind,
Fig. 7 das Teil des Antriebsstranges in der Vorderansicht gemäß dem Schnitt A-A nach Fig. 6,
Fig. 8 die zu Fig. 7 entsprechende Draufsicht auf das Teil des Antriebsstrangs,
Fig. 9 die Einzelheit "X" gemäß Fig. 7 und
Fig. 10 einen Ausschnitt aus der Darstellung gemäß Fig. 2, kurz vor Erreichen der Position, in der der Motor mit dem Getriebe verbunden ist.

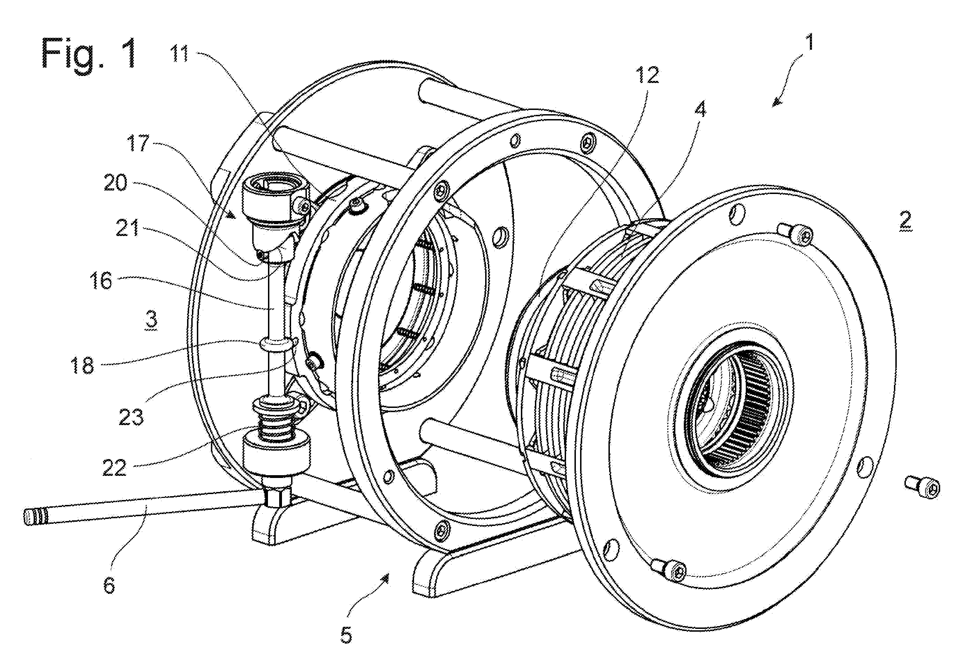

In Fig. 1 ist eine Antriebsvorrichtung 1 als ein Teil eines Antriebsstranges eines Rennsportfahrzeugs zu sehen, wobei nur angedeutet ist, wo der Motor 2 und wo das Getriebe 4 sitzt. Eine Kupplung 3 überträgt das Drehmoment vom Motor 2 auf das Getriebe 4. Im Rennsport ist es gegebenenfalls wichtig, dass ein Lösen des Motors 2 vom Getriebe 4 schnell erfolgen kann. Daher ist ein Schnellverbindungsmittel 5 vorgesehen, das ein schnelles Verbinden und Lösen von Motor und Getriebe erlaubt.

Das Schnellverbindungsmittel 5 wird durch ein Betätigungselement 6 in Form eines Schwenkhebel betätigt. Das Verschwenken des Betätigungshebels 6 dreht eine Welle 16, wobei der Drehwinkel der Welle zwischen der geschlossenen und der geöffneten Stellung des Schnellverbindungsmittels 5 ca. 90° beträgt. Die Welle 16 ist mit einem Ende in einer Kulissenlagerung 17 gelagert. Beim Drehen der Welle 16 wird hierbei ein Stift 20 entlang einer Kulisse 21 geführt, so dass es infolge der Drehung der Welle 16 auch zu einer axialen Verschiebung der Welle 16 kommt. Eine Feder 22 spannt dabei die Welle 16 in eine axiale Richtung vor, und zwar in die geschlossene Position des Schnellverbindungsmittels 5.

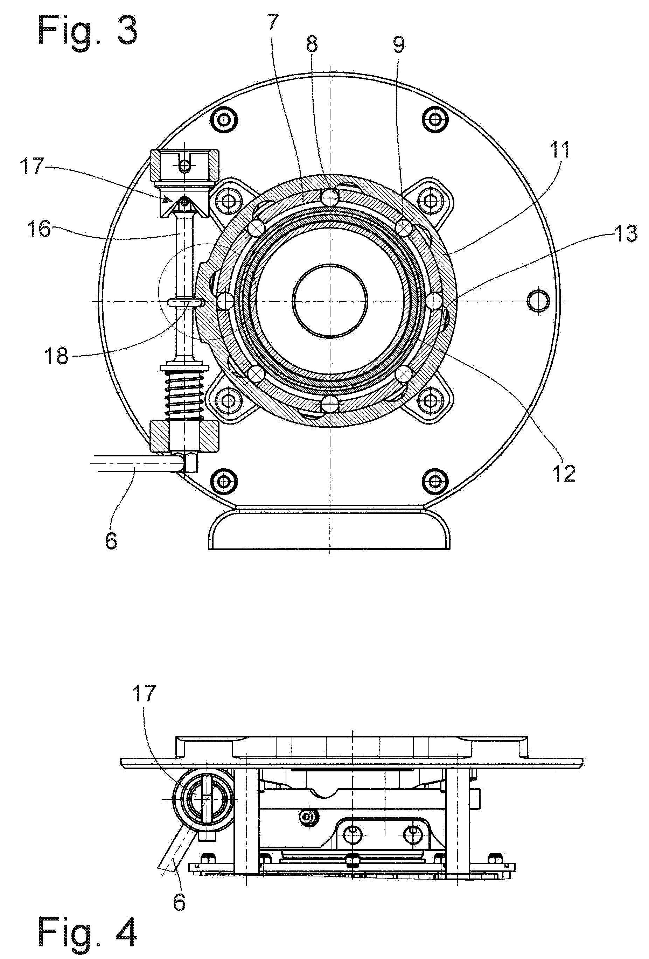

Die Welle 16 trägt einen Mitnehmer 18, der in eine Nut 23 in einem ringförmigen Verschiebeelement 11 eingreift. Wird das Betätigungselement 6 betätigt, hat dies zur Folge, dass das Verschiebeelement 11 um eine Drehachse 10 (s. Fig. 3) um einen kleinen Winkel gedreht wird.

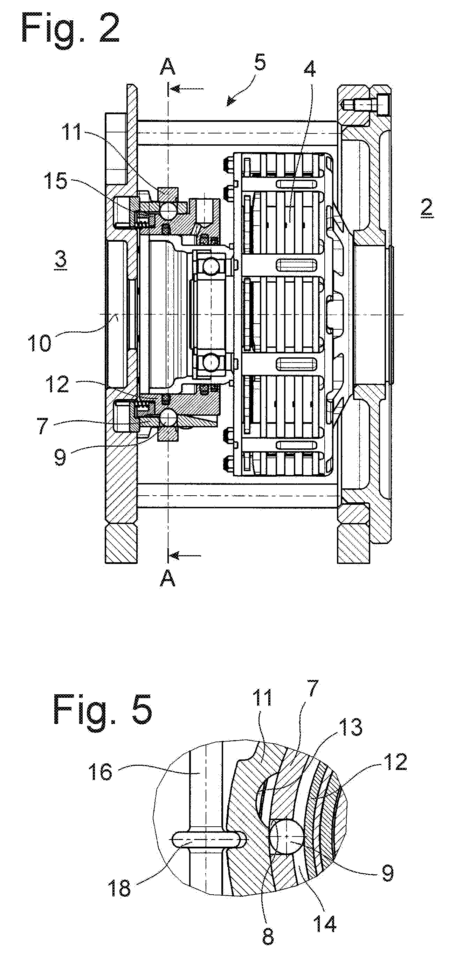

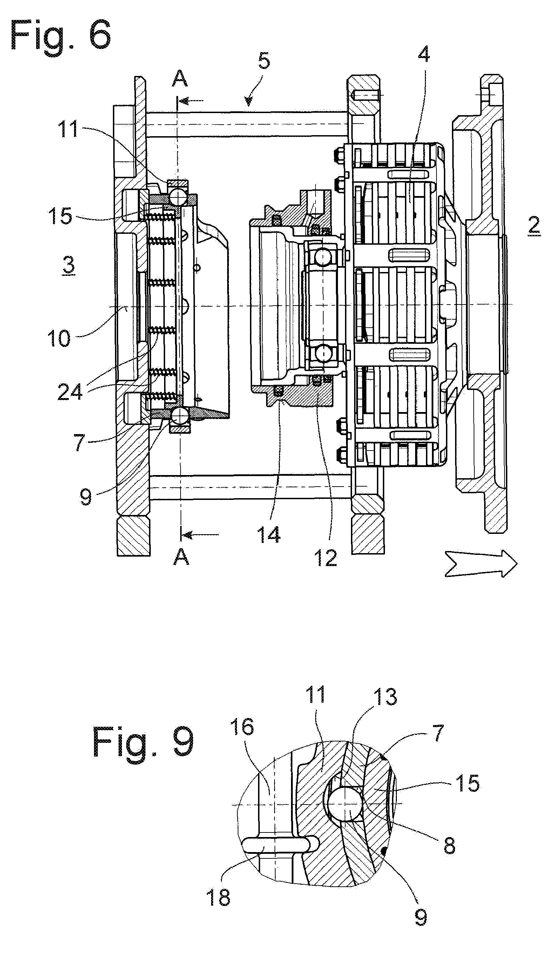

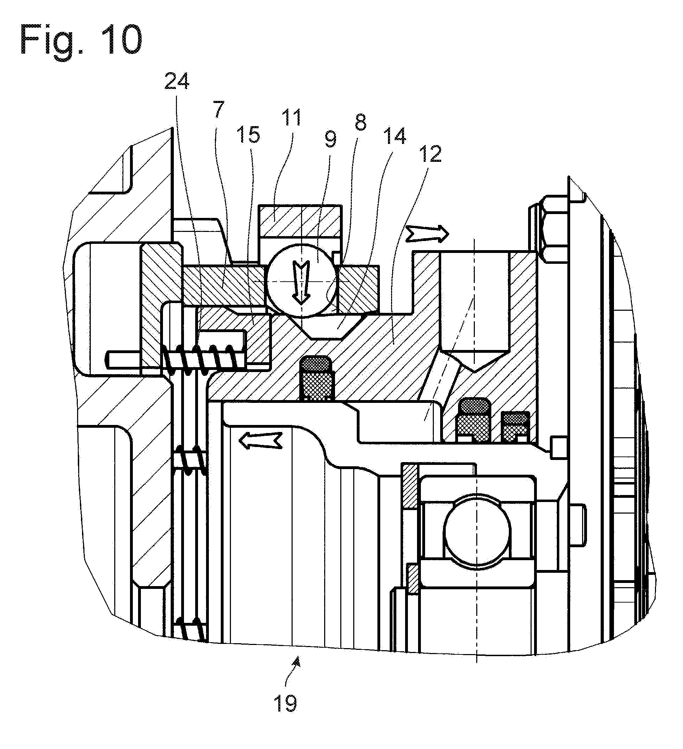

Details gehen hierzu aus den Figuren 2 bis 10 hervor. In den Figuren 2 bis 5 ist dabei die Position des Schnellverbindungsmittels 5 dargestellt, in der Motor 2 und Getriebe 4 miteinander verbunden sind. In den Figuren 6 bis 9 ist der gelöste Zustand dargestellt. Fig. 10 zeigt einen Zustand nahe der gekoppelten Stellung.

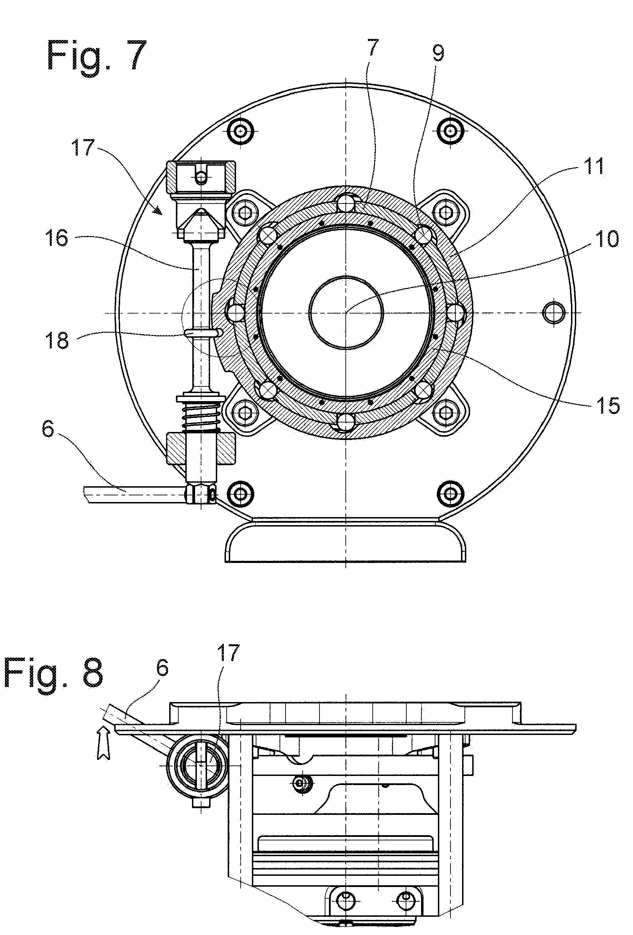

Die Schnellverbindungsmittel 5 weisen im wesentlichen drei konzentrisch zueinander angeordnete bzw. anordenbare ringförmige Teile auf, nämlich ein Halteelement 7, ein Verschiebeelement 11 und ein geklemmtes Element 12. Das Halteelement 7 hält eine Anzahl Sperrkörper 8, die im Ausführungsbeispiel als Stahlkugeln ausgebildet sind. Hierzu sind in das Halteelement 7 sich radial erstreckende Bohrungen eingebracht, die Ausnehmungen 8 für die Kugeln 9 bilden. Demgemäß können sich die Kugeln 9 in ihren Ausnehmungen 8 radial bewegen. Das Verschiebeelement 11 ist radial außerhalb des Halteelements 7 angeordnet und weist an der dem Halteelement 7 zugewandten inneren zylindrischen Seite Ausnehmungen 13 auf, die - wie es am besten in Fig. 5 gesehen werden kann - die Form eines Abschnitts eines Zylinders haben. Die Ausnehmungen 13 sind korrespondierend zu den Kugeln 9 in das Verschiebeelement 11 eingebracht, wie es gut in Fig. 3 gesehen werden kann. Demgemäß kann das Verschiebeelement 11 relativ zum Halteelement 7 in eine Stellung gedreht werden, wo die Kugeln 9 radial nach innen gedrückt werden, was in Fig. 3 und in Fig. 5 zu sehen ist. Wird das Verschiebeelement 11 mittels des Betätigungselements 6, der Welle 16, der Kulissenlagerung 17 und dem Mitnehmer 18 indes verdreht, kann das Verschiebeelement 11 relativ zum Halteelement 7 so positioniert werden, dass die Kugeln 9 in die Ausnehmungen 13 in dem Verschiebeelement 11 eintreten können; dies ist in den Figuren 7 und 9 zu sehen.

Damit kann das geklemmte Teil 12, das eine ringnutartige Eindrehung 14 für den Eintritt der Kugeln 9 aufweist, wahlweise entweder geklemmt (s. Fig. 2) oder freigegeben (s. Fig. 6) werden. Damit wiederum kann die Verbindung zwischen Motor 2 und Getriebe 4 hergestellt oder gelöst werden.

Damit die Kugeln 9 im entkoppelten Zustand, d. h. bei aus dem Halteelement 7 herausgezogenem geklemmten Element 12, nicht radial nach innen herausfallen, ist ein Verschlussring 15 am Halteelement 7 bzw. am Verschiebeelement 11 federvorgespannt angeordnet. Federn 24 drücken den Verschlussring 15 elastisch vor die Ausnehmungen 8 im Halteelement 7 und hindern die Kugeln 9 am Herausfallen.

Die Verfahrensweise beim Lösen von Motor 2 und Getriebe 4 durch Verschwenken des Betätigungselements 6 ist damit klar ersichtlich: Beim Schwenken des Hebels 6 wird beim Lösen der Verbindung den Kugeln 9 mehr radialer Raum nach außen durch die Ausnehmungen 13 gewährt, was ein Herausgleiten der Kugeln 9 aus der ringnutartigen Eindrehung 14 erlaubt. Im Falle des Verbindens des Verbindungsmittels werden die Kugeln 9 durch die radial innere Ringfläche des Verschiebeelements 11 radial nach innen und damit in die ringnutartige Eindrehung 14 gedrückt.

Die Kupplung 3 ist vorliegend am Motor 2 befestigt, ein Ausrücker 19 (s. Fig. 10) ist am Getriebe 4 befestigt. Um das Getriebe 4 vom Motor 2 trennen zu können, muss der Ausrücker 19 von der Kupplung 3 getrennt werden können. Dies ermöglicht das Schnellverbindungsmittel 5 in der erläuterten Weise. Das Lösen des Schnellverbindungsmittels 5 kann von außerhalb erfolgen, nämlich durch Betätigung des Betätigungselements 6.

Bei der Montage wird das Getriebe 4 in Richtung Motor 2 geschoben. Der Ausrücker 19 verbindet sich dabei selbsttätig mit der Kupplung 3.

### Bezugszeichenliste

- 1: Antriebsvorrichtung
- 2: Motor (Verbrennungsmotor)
- 3: Kupplung
- 4: Getriebe
- 5: Schnellverbindungsmittel
- 6: Betätigungselement
- 7: Halteelement
- 8: Ausnehmung
- 9: Sperrkörper (Kugel)
- 10: Drehachse
- 11: Verschiebeelement
- 12: geklemmtes Element
- 13: Ausnehmung
- 14: ringnutartige Eindrehung
- 15: Verschlussring
- 16: Welle
- 17: Kulissenlagerung
- 18: Mitnehmer
- 19: Ausrücker
- 20: Stift
- 21: Kulisse
- 22: Feder
- 23: Nut
- 24: Feder

## Patentansprüche

1. Antriebsvorrichtung (1), insbesondere für einen Kraftfahrzeug, die ein Motor (2), eine Kupplung (3) und ein Getriebe (4) umfasst, wobei der Motor (2) und das Getriebe (4) bei bestimmungsgemäßem Gebrauch lösbar verbunden sind,
**dadurch gekennzeichnet,**
**dass** zwischen dem Motor (2) und dem Getriebe (4) ein Schnellverbindungsmittel (5) angeordnet ist, mit dem die Verbindung zwischen Motor (2) und Getriebe (4) hergestellt und gelöst werden kann.

2. Antriebsvorrichtung nach Anspruch 1,
**dadurch gekennzeichnet, dass** das Schnellverbindungsmittel (5) ein Betätigungselement (6) umfasst, durch dessen Betätigung das Schnellverbindungsmittel (5) verriegelt oder entriegelt werden kann.

3. Antriebsvorrichtung nach Anspruch 2,
**dadurch gekennzeichnet, dass** das Betätigungselement (6) als Schwenkhebel ausgebildet ist.

4. Antriebsvorrichtung nach einem der Ansprüche 1 bis 3,
**dadurch gekennzeichnet, dass** das Schnellverbindungsmittel (5) ein Halteelement (7) mit mindestens einer Ausnehmung (8) aufweist, in der mindestens ein Sperrkörper (9) zur Drehachse (10) der Antriebsvorrichtung (1) radial verschieblich, jedoch axial festgelegt angeordnet ist, wobei das Schnellverbindungsmittel (5) weiterhin ein Verschiebeelement (11) aufweist, das abhängig von seiner Position relativ zum Halteelement (7) die radiale Position des mindestens einen Sperrkörpers (9) unterschiedlich begrenzt, und wobei das Schnellverbindungsmittel (5) weiterhin ein geklemmtes Element (12) aufweist, das abhängig von der radialen Position des mindestens einen Sperrkörpers (9) entweder zum Halteelement (7) axial fixiert oder axial freigegeben ist, wobei das Halteelement (7) mittelbar oder unmittelbar am Motor (2) oder am Getriebe (4) axial befestigt ist und wobei das geklemmte Element (12) mittelbar oder unmittelbar am Getriebe (4) oder am Motor (2) axial befestigt ist.

5. Antriebsvorrichtung nach Anspruch 4,
**dadurch gekennzeichnet, dass** das Halteelement (7), das Verschiebeelement (11) und das geklemmte Element (12) ringförmig ausgebildet und konzentrisch zueinander angeordnet sind.

6. Antriebsvorrichtung nach Anspruch 5,
**dadurch gekennzeichnet, dass** das Verschiebeelement (11) radial außenliegend zum Halteelement (7) angeordnet ist, wobei eine innere zylindrische Fläche des Verschiebeelements (11) und eine äußere zylindrische Fläche des Halteelements (7) aneinanderliegende Gleitflächen bilden.

7. Antriebsvorrichtung nach Anspruch 4,
**dadurch gekennzeichnet, dass** der mindestens eine Sperrkörper (9) als Kugel ausgebildet ist.

8. Antriebsvorrichtung nach Anspruch 4,
**dadurch gekennzeichnet, dass** eine Anzahl Sperrkörper (9) äquidistant um den Umfang des Halteelements (7) herum in Ausnehmungen (8) angeordnet ist.

9. Antriebsvorrichtung nach Anspruch 4,
**dadurch gekennzeichnet, dass** das Verschiebeelement (11) eine der Anzahl der Sperrkörper (9) entsprechende Anzahl von Ausnehmungen (13) zum zumindest teilweisen Eintritt der Sperrkörper (9) aufweist.

10. Antriebsvorrichtung nach Anspruch 9,
**dadurch gekennzeichnet, dass** die Ausnehmungen (13) im Verschiebeelement (11) eine zylindrische oder kugelige Oberfläche aufweisen.

11. Antriebsvorrichtung nach einem der Ansprüche 4 bis 10,
**dadurch gekennzeichnet, dass** das geklemmte Element (12) als ringförmiges Teil ausgebildet ist und einen Aufnahmeabschnitt für den mindestens einen Klemmkörper (9) aufweist, der als ringnutartige Eindrehung (14) ausgebildet ist.

12. Antriebsvorrichtung nach einem der Ansprüche 4 bis 11,
**dadurch gekennzeichnet, dass** ein Verschlussring (15) axial verschieblich und federvorgespannt direkt oder indirekt am Halteelement (7) und/oder am Verschiebeelement (11) angeordnet ist, um bei gelöstem geklemmten Element (12) sich vor die Ausnehmungen (8) im Haltelement (7) zur Verhinderung des Herausfallens des mindestens einen Klemmkörpers (9) aus dem Halteelement (7) zu schieben.

13. Antriebsvorrichtung nach einem der Ansprüche 3 bis 12,
**dadurch gekennzeichnet, dass** der Schwenkhebel (6) mit einer Welle (16) verbunden ist, die mit einem ihrer Enden in einer Kulissenlagerung (17) drehbar gelagert ist, so dass bei der Verdrehung der Welle (16) durch Verschwenken des Schwenkhebel (6) die Welle axial verschoben wird.

14. Antriebsvorrichtung nach Anspruch 13,
**dadurch gekennzeichnet, dass** an der Welle (16) ein Mitnehmer (18) angeordnet ist, der am Außenumfang des Verschiebeelement (11) angreift und bei seiner axialen Verschiebung das Verschiebeelement (11) um die Drehachse (10) dreht.

15. Antriebsvorrichtung nach einem der Ansprüche 1 bis 14,
**dadurch gekennzeichnet, dass** die Kupplung (3) am Motor (2) befestigt ist.

16. Antriebsvorrichtung nach einem der Ansprüche 1 bis 14,
**dadurch gekennzeichnet, dass** ein Ausrücker (19) bei bestimmungsgemäßem Gebrauch am Getriebe (4) befestigt ist.

17. Antriebsvorrichtung nach einem der Ansprüche 1 bis 16,
**dadurch gekennzeichnet, dass** sie Bestandteil des Antriebsstrangs eines Motorsportfahrzeugs ist.
